# EUROPÄISCHE PATENTANMELDUNG

(11) **EP 1 101 680 A1**
(43) Veröffentlichungstag der Anmeldung: **23.05.2001**
(21) Anmeldenummer: 00125069.5
(22) Anmeldetag: 17.11.2000
(51) Int. Cl.: B60T 8/36, B60T 13/68, F16K 31/06

(54) **Magnetventil mit einem Rückschlagventil**

(30) Priorität: 20.11.1999 DE 19955884
(71) Anmelder: ROBERT BOSCH GMBH, 70442 Stuttgart (DE)
(72) Erfinder: Gruschwitz, Peggy, 70329 Stuttgart (DE); Oehler, Martin, 74189 Weinsberg (DE); Bauer, Heike, 70376 Stuttgart (DE); Nicodemus, Rolf, Dr., 74321 Bietigheim-Bissingen (DE); Schindler, Ralf, 71229 Leonberg (DE)

(57) **Zusammenfassung**

Ein Magnetventil (1) weist ein zwischen einem Druckmitteleinlaß (17) und einem Druckmittelauslaß (18) angeordnetes Sitzventil (26) und im Bypass zu diesem ein Rückschlagventil (30) mit einem Schließkörper (41) und als ebenen Ventilsitz eine Kreisringfläche (45) an der Stirnwand (46) einer den Schließkörper (41) aufnehmenden hohlzylindrischen Ausnehmung (34) eines Ventilbauteils (31) auf. Der Schließkörper (41) hat einen scheibenförmigen formsteifen Kern (42) mit einer wenigstens einseitig aufgebrachten, dem Ventilsitz zugewandten gummielastischen Beschichtung (43).

Das Magnetventil (1) ist in schlupfgeregelten hydraulischen Bremsanlagen von Kraftfahrzeugen verwendbar.

## Beschreibung

### Stand der Technik

Die Erfindung geht aus von einem Magnetventil nach der Gattung des Patentanspruchs 1.

Es ist schon ein derartiges Magnetventil bekannt (DE 196 35 693 A1), bei dem das Rückschlagventil einen kugelförmigen Schließkörper aus Stahl aufweist, dem ein hohlkegelförmiger Ventilsitz in einem Ventilbauteil zugeordnet ist. Da das Ventilbauteil aus thermoplastischem Kunststoff spritzgegossen ist und eine ungleichförmige Massenverteilung aufweist, treten bei der Herstellung und beim Fügen mit dem Magnetventil in ein Gehäuse eines Hydroaggregats einer schlupfgeregelten hydraulischen Bremsanlage eines Kraftfahrzeugs Formabweichungen des Ventilsitzes auf, welche im Zusammenwirken mit dem formsteifen Schließkörper bei niedrigen Drücken zu Dichtheitsproblemen am Rückschlagventil führen.

### Vorteile der Erfindung

Das erfindungsgemäße Magnetventil mit den Merkmalen des Patentanspruchs 1 hat demgegenüber den Vorteil, daß am Rückschlagventil bereits bei niedrigen Drücken die Dichtfunktion der gummielastischen Beschichtung des Schließkörpers wirksam wird, bei höheren Drücken der formsteife Kern dem Schließkörper eine ausreichende Festigkeit verleiht. Die Beschichtung des Schließkörpers verbessert im Vergleich zum bekannten Entwicklungsstand die Dichtwirkung, indem sie Formabweichungen des Ventilsitzes ausgleicht.

Durch die in den Unteransprüchen aufgeführten Maßnahmen sind vorteilhafte Weiterbildungen und Verbesserungen des im Patentanspruch 1 beschriebenen Magnetventils gegeben.

Mit der im Anspruch 2 gekennzeichneten Ausgestaltung des Schließkörpers des Rückschlagventils wird eine Montageerleichterung geschaffen.

Die im Anspruch 3 offenbarte Maßnahme ermöglicht eine weitgehend rotationssymmetrische Gestaltung des Ventilbauteils und vermeidet bei dessen Fertigung durch Kunststoffspritzgießen weitgehend Formabweichungen des Ventilsitzes. Außerdem ist bei dieser Gestaltung ein relativ großer Durchlaßquerschnitt des Rückschlagventils erzielbar.

### Zeichnungen

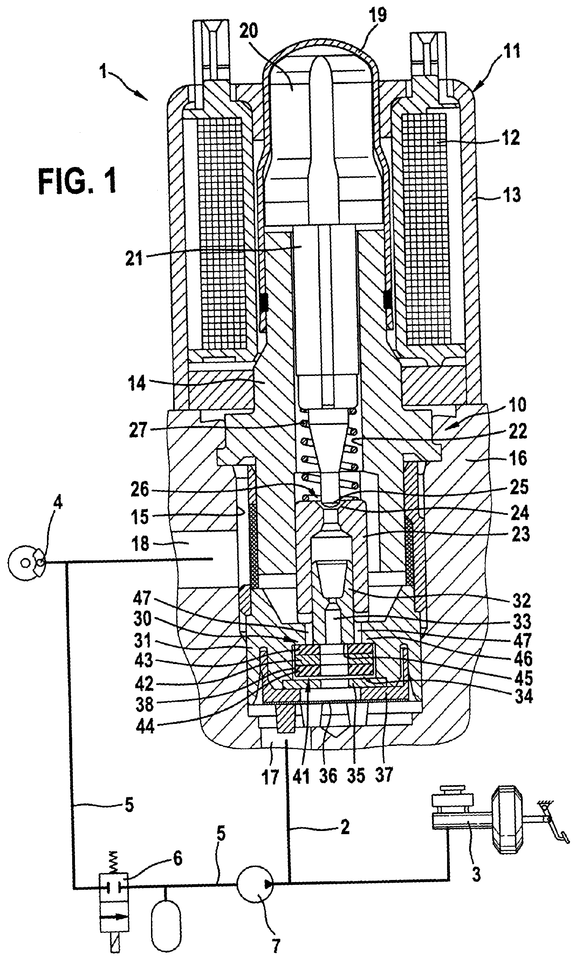

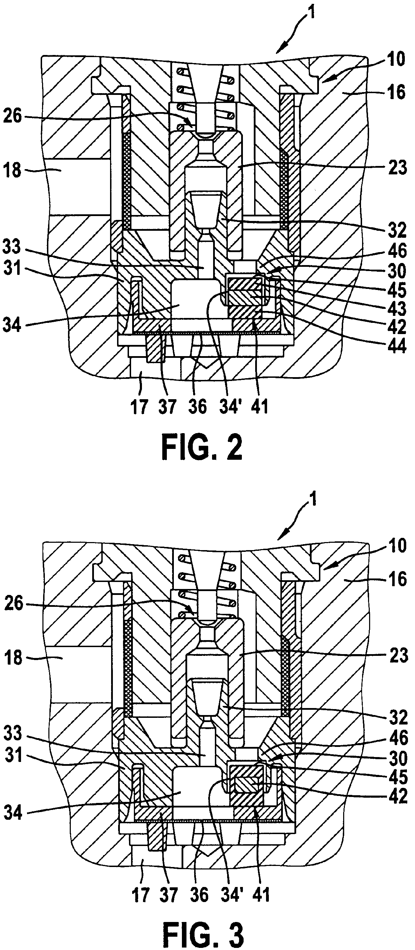

Ausführungsbeispiele der Erfindung sind in den Zeichnungen vereinfacht dargestellt und in der nachfolgenden Beschreibung näher erläutert. Es zeigen Figur 1 einen Längsschnitt durch ein Magnetventil mit einem Rückschlagventil mit beschichtetem, ringscheibenförmigem Schließkörper, Figur 2 einen Teil eines Magnetventils im Schnitt mit einem beidseitig beschichteten scheibenförmigen Schließkörper eines Rückschlagventils und Figur 3 eine Darstellung gemäß Figur 2 mit einem Rückschlagventil mit allseitig beschichtetem Schließkörper.

### Beschreibung der Ausführungsbeispiele

Ein in Figur 1 der Zeichnung als erstes Ausführungsbeispiel wiedergegebenes Magnetventil 1 ist in einer nur ausschnittsweise dargestellten schlupfgeregelten hydraulischen Bremsanlage von Kraftfahrzeugen in einer Leitungsverbindung 2 zwischen einem Hauptbremszylinder 3 und einem Radbremszylinder 4 angeordnet. In einer das Magnetventil 1 umgehenden Leitungsverbindung 5 der Bremsanlage sind ein zweites Magnetventil 6 und eine Pumpe 7 angeordnet. Das stromlos offene Magnetventil 1 und das stromlos geschlossene Magnetventil 6 sind Teile einer Einrichtung zur schlupfabhängigen Modulation des im Radbremszylinder 4 wirkenden Bremsdrucks.

Das Magnetventil 1 ist aus zwei Baugruppen gebildet: Einem hydraulischen Teil 10 und einem elektrischen Teil 11, der auf den hydraulischen Teil aufgesteckt ist. Der elektrische Teil 11 besteht im wesentlichen aus einer Magnetspule 12 und einem Joch 13. Der hydraulische Teil 10 weist ein Ventilgehäuse 14 auf, das mittels einer Verstemmverbindung in einer Aufnahmebohrung 15 eines Ventilblocks 16 befestigt ist. In die Aufnahmebohrung 15 mündet bodenseitig ein mit dem Hauptbremszylinder 3 in Verbindung stehender Druckmitteleinlaß 17 ein; umfangsseitig geht von der Aufnahmebohrung ein Druckmittelauslaß 18 aus, der mit dem Radbremszylinder 4 in Verbindung steht. Außerhalb des Ventilblocks 16 ist an dem Ventilgehäuse 14 ein vom elektrischen Teil 11 umfaßter Ventildom 19 befestigt. In diesem ist ein längsbewegbar geführter Magnetanker 20 aufgenommen, der mit einem Stößel 21 zusammenwirkt. Der Stößel 21 erstreckt sich in einer Durchgangsbohrung 22 des Ventilgehäuses 14, in der ventildomabgewandt ein hülsenförmiger Ventilkörper 23 sitzt.

Dieser weist einen mit dem Druckmitteleinlaß 17 in Verbindung stehenden Ventilsitz 24 auf. Dem Ventilsitz 24 ist ein am Stößel 21 ausgebildetes Schließglied 25 zugeordnet. Der Ventilsitz 24 und das Schließglied 25 bilden ein Sitzventil 26, welches aus der gezeichneten Offenstellung durch Erregung der Magnetspule 12 entgegen der Kraft einer Rückstellfeder 27 in seine Schließstellung überführbar ist.

Für einen schnellen Bremsdruckabbau im Radbremszylinder 4 und insbesondere für den Fall, daß das Magnetventil 1 fehlerhafterweise in seiner Schließstellung verharrt, ist ein im Bypass zum Sitzventil 26 angeordnetes Rückschlagventil 30 vorgesehen. Hierzu ist in der Aufnahmebohrung 15 des Ventilblocks 16 in dem zwischen dem Druckmitteleinlaß 17 und dem Druckmittelauslaß 18 liegenden Raum ein den Bohrungsquerschnitt ausfüllendes Ventilbauteil 31 aufgenommen, welches mit einem zentralen Ansatz 32 passend in den Ventilkörper 23 eingreift. Das aus einem Kunststoff gespritzte, im wesentlichen rotationssymmetrische Ventilbauteil 31 hat einen in seiner Längsachse verlaufenden Durchlaß 33, der ansatzabgewandt in eine kreiszylindrische Ausnehmung 34 übergeht. Gegen den Druckmitteleinlaß 17 der Aufnahmebohrung 15 hin ist die Ausnehmung 34 durch eine Ringscheibe 35 und eine Filterscheibe 36 in einem ansatzabgewandt auf das Ventilbauteil 31 aufgesteckten Abschlußteil 37 abgeschlossen, der die Ringscheibe 35 in ihrer Lage sichert. Die Ausnehmung 34 des Ventilbauteils 31 bildet zusammen mit der Ringscheibe 35 eine nach radial innen offene Umlaufnut 38 des Magnetventils 1, welche konzentrisch zu der Achse des Druckmitteldurchlasses 33 im Ventilbauteil 31 verläuft.

In der kreiszylindrischen Ausnehmung 34 des Ventilbauteils 31 ist ein Schließkörper 41 des Rückschlagventils 30 mit radialem und axialem Spiel aufgenommen. Der Schließkörper 41 weist einen ringscheibenförmigen, formsteifen Kern 42 aus Metall auf, der auf seinen beiden Stirnseiten mit einer gummielastischen Beschichtung 43 und 44 vereinigt ist. Dem Schließkörper 41 ist als ebener Ventilsitz eine Kreisringfläche 45 zugeordnet, mit der eine Stirnwand 46 des Ventilbauteils 31 die Ausnehmung 34 ansatzseitig begrenzt. In der Kreisringfläche 45 liegt mittig der Druckmitteldurchlaß 33 des Magnetventils 1. In die Kreisringfläche 45 münden kreisförmig um den Druckmitteldurchlaß 33 des Magnetventils 1 angeordnete Druckmitteldurchlässe 47 des Rückschlagventils 30. Diese sind als parallel zum Druckmitteldurchlaß 33 verlaufende Bohrungen im Ventilbauteil 31 gestaltet und stehen druckmittelleitend mit dem Druckmittelauslaß 18 in Verbindung. Der Schließkörper 41 greift mit seiner ventilsitzseitigen Beschichtung 43 radial innerhalb und außerhalb der kreisförmigen Anordnung der Druckmitteldurchlässe 47 des Rückschlagventils 30 an der Kreisringfläche 45 an.

In Figur 1 der Zeichnung ist das Rückschlagventil 30 in der Schließstellung gezeichnet. Eine geringe Druckdifferenz zwischen dem Druckmitteleinlaß 17 und dem Druckmittelauslaß 18 stellt sicher, daß Formabweichungen des Ventilsitzes, wie sie bei einem spritzgegossenen Ventilbauteil 31 auftreten können, von der Beschichtung 43 des Schließkörpers 41 ausgeglichen werden. Eine geringe Druckdifferenz zwischen dem Druckmittelauslaß 18 und dem Druckmitteleinlaß 17 des Magnetventils 1 bewirkt ein Abheben des Schließkörpers 41 von der den Ventilsitz bildenden Kreisringfläche 45, so daß Druckmittel bei geschlossenem Sitzventil 26 vom Druckmittelauslaß 18 durch die Druckmitteldurchlässe 47 des Rückschlagventils 30 zum Druckmitteleinlaß 17 fließen kann.

Die Ausführungsbeispiele des Magnetventils 1 nach den Figuren 2 und 3 unterscheiden sich von demjenigen nach Figur 1 dadurch, daß statt mehrerer Druckmitteldurchlässe lediglich ein Druckmitteldurchlaß 47 des Rückschlagventils 30 mit größerem Querschnitt als in Figur 1 seitlich neben dem Druckmitteldurchlaß 33 des Magnetventils 1 im Ventilbauteil 31 ausgebildet ist. Außerdem ist die Ringscheibe 35 entfallen. Gleichachsig zum Druckmitteldurchlaß 47 ist in der Ausnehmung 34 des Ventilbauteils 31 ein hohlzylindrischer Ausnehmungsteil 34 zur Aufnahme und Führung des Schließkörpers 41 des Rückschlagventils 30 ausgestaltet. Dieser ist in Figur 2 in Offenstellung des Rückschlagventils 30 dargestellt und arbeitet in gleicher Weise wie derjenige nach dem vorbeschriebenen Ausführungsbeispiel.

Der Schließkörper 41 des in Figur 3 dargestellten weiteren Ausführungsbeispiels des Magnetventils 1 unterscheidet sich von demjenigen nach Figur 2, daß der scheibenförmige Kern 42 allseitig, das heißt nicht nur an seinen beiden Stirnseiten, sondern auch umfangsseitig mit einem gummielastischen Werkstoff beschichtet ist.

Abweichend von den beschriebenen Ausführungsbeispielen nach den Figuren 1 und 2 kann der dort verwendete Schließkörper 41 auch nur mit einer einseitig angeordneten, ventilsitzseitigen Beschichtung 43 versehen sein.

## Patentansprüche

1. Magnetventil (1), insbesondere für schlupfgeregelte hydraulische Bremsanlagen von Kraftfahrzeugen, mit einem zwischen einem Druckmitteleinlaß (17) und einem Druckmittelauslaß (18) angeordneten Sitzventil (26) und einem im Bypass zum Sitzventil (26) angeordneten Rückschlagventil (30) mit einem Schließkörper (41) und einem Ventilsitz (45) an der Stirnwand (46) einer den Schließkörper (41) aufnehmenden hohlzylindrischen Ausnehmung (34) eines Ventilbauteils (31),
dadurch gekennzeichnet,
daß der Ventilsitz (45) des Rückschlagventils (30) eben ausgebildet ist und der Schließkörper (41) einen scheibenförmigen formsteifen Kern (42) mit einer wenigstens einseitig aufgebrachten, dem Ventilsitz (45) zugewandten gummielastischen Beschichtung (43) aufweist.

2. Magnetventil nach Anspruch 1, dadurch gekennzeichnet, daß der Kern (42) des Schließkörpers (41) beidseitig eine gummielastische Beschichtung (43, 44) aufweist oder allseitig mit einer derartigen Beschichtung versehen ist.

3. Magnetventil nach Anspruch 1 oder 2, dadurch gekennzeichnet, daß der Ventilsitz des Rückschlagventils (30) eine Kreisringfläche (45) eines Ventilbauteils (31) mit mittig mündendem Druckmitteldurchlaß (33) des Magnetventils (1) ist,
daß in die Kreisringfläche (45) kreisförmig um den Druckmitteldurchlaß (33) des Magnetventils (1) angeordnete Druckmitteldurchlässe (47) des Rückschlagventils (30) münden und daß der Schließkörper (41) des Rückschlagventils (30) mit seiner Beschichtung (43) radial innerhalb und außerhalb der Druckmitteldurchlässe (47) des Rückschlagventils (30) an der Kreisringfläche (45) angreift.
